# EUROPÄISCHE PATENTANMELDUNG

(11) **EP 1 317 983 A2**
(43) Veröffentlichungstag der Anmeldung: **11.06.2003**
(21) Anmeldenummer: 02024634.4
(22) Anmeldetag: 04.11.2002
(51) Int. Cl.: B23D 55/04

(54) **Vorrichtung zur Herstellung von Hochkantlamellenparkett geringer Dicke**

(30) Priorität: 05.12.2001 DE 10159581
(71) Anmelder: Parkett Hinterseer GmbH, 81737 München (DE)
(72) Erfinder: Hinterseer, Bartholomäus, 81737 München (DE)
(74) Vertreter: Berngruber, Otto, Dr. Dipl.-Chem.

(57) **Zusammenfassung**

Eine Vorrichtung zur Herstellung von Hochkantlamellenparkett geringer Dicke weist eine Säge, insbesondere Bandsäge (4), und eine Führungsnut (10) auf, in der mit einem Klebeband (3) umwickelte dicke Hochkantlamellenparkett-Tafeln (1) der Säge so zugeführt werden, dass die Tafeln (1) in einer zur Tafelebene parallelen Ebene durchtrennt werden.

## Beschreibung

Industrieparkett oder Hochkantlamellenparkett wird in Tafeln mit einer Dicke von 22 mm angeboten. Häufig wird das Parkett dadurch zu hoch, beispielsweise wenn ein Teppich- oder Kunststoffboden durch ein solches Parkett ersetzt werden soll. Um das Parkett verlegen zu können, müssen dann aufwändige Arbeiten durchgeführt, z.B. der Estrichboden abgetragen werden.

Aufgabe der Erfindung ist es daher, eine Vorrichtung bereit zu stellen, mit der Hochkantlamellenparkett geringer Dicke einfach und schnell erhalten werden kann.

Dies wird erfindungsgemäß mit der in Anspruch 1 gekennzeichneten Vorrichtung erreicht. In den Unteransprüchen sind vorteilhafte Ausgestaltungen der erfindungsgemäßen Vorrichtung wiedergegeben.

Nach der Erfindung wird ein Hochkantlamellenparkett geringer Dicke dadurch hergestellt, dass die handelsüblichen dicken Hochkantlamellenparkett-Tafeln, die mit einem Klebeband umwickelt sind, entlang einer Führung mit einer Säge in einer zur Tafelebene parallelen Ebene durchtrennt werden, vorzugsweise in der Mitte, um dünne Tafeln gleicher Dicke zu erhalten.

Wenn also beispielsweise eine 22 mm starke Hochkantlamellenparkett-Tafel in der Mitte durchgeschnitten wird, werden zwei je 11 mm dicke Hochkantlamellenparkett-Tafeln erhalten.

Die einzelnen Lamellen dieser dünneren Tafeln werden durch das Klebeband zusammengehalten, das nach dem Zerschneiden der dicken Tafeln noch auf einer Seite der dünnen Tafeln vorhanden ist.

Falls die Klebekraft des Klebebandes auf einer Seite der Tafel nicht ausreicht, können die dicken Hochkantlamellenparkett-Tafeln auch mit mehreren und/oder breiteren Klebebändern umwickelt werden. Auch kann zusätzlich eine Einrichtung am Ende der Führung der Tafeln vorgesehen sein, die die nach dem Durchtrennen der dicken Tafeln gebildeten dünnen Tafeln auch auf der anderen Seite mit einem zusätzlichen Klebeband versieht oder die dünnen Tafeln mit einem zusätzlichen Klebeband umwickelt. Das zusätzliche Klebeband kann auch manuell aufgebracht werden.

Als Säge wird vorzugsweise eine Bandsäge verwendet, bei der ein endloses Sägeband um normalerweise zwei Umlenkrollen umläuft.

Die Führung wird vorzugsweise durch eine Führungsnut gebildet, in der die Tafeln hochkant stehend angeordnet sind, um von dem senkrechten Schneidtrum der Bandsäge durchschnitten zu werden. Die Führungsnut weist weist vorzugsweise eine Länge auf, das sie sowohl vor dem Schneidtrum wie nach dem Schneidtrum mehrere hintereinander angeordnete Tafeln aufzunehmen vermag. Die Tiefe der Führungsnut entspricht wenigstens der Hälfte, vorzugsweise wenigstens drei viertel der Breite der Tafel.

Damit die dünnen Tafeln eine genau reproduzierbare Dicke aufweisen, werden sie beim Durchschneiden gegen die eine Wand der Führungsnut gedrückt, und zwar vorzugsweise mit zwei Anpressrollen, die an der gegenüberliegenden Nutwand angeordnet sind. Diese Rollen können federbelastet oder mit einem gummielastischem Material ummantelt sein. Vorzugsweise ist in Bewegungsrichtung der Tafeln vor und nach dem Schneidtrum der Bandsäge jeweils eine solche Andrückrolle vorgesehen.

Die wenigstens eine Andrückrolle wird vorzugsweise durch einen Motor angetrieben, um die Tafel durch das Schneidtrum zu bewegen oder diese Bewegung zumindest zu unterstützen. Durch die in Bewegungsrichtung der Tafeln nach dem Schneidtrum der Bandsäge angeordnete angetriebene Anpressrolle werden die dünnen Tafeln weiterbewegt.

Die Zuführung der zu zerschneidenden dicken Tafeln in der Führungsnut zu dem Schneidtrum kann durch einen Schieber erfolgen, der beispielsweise mit einer pneumatischen Kolben-/Zylindereinheit betätigt wird.

Nachstehend ist eine Ausführungsform der erfindungsgemäßen Vorrichtung anhand der beigefügten Zeichnung beispielhaft näher erläutert. Darin zeigen jeweils schematisch
- Fig. 1: eine Hochkantlamellenparkett-Tafel in perspektivischer Wiedergabe;
- Fig. 2: die Ansicht einer Bandsäge von vorne mit der Führung für die Hochkantlamellenparkett-Tafeln im Schnitt; und
- Fig. 3: eine Draufsicht auf die Vorrichtung entsprechend der Linie III-III in Fig. 2 mit weggebrochenen Teilen.

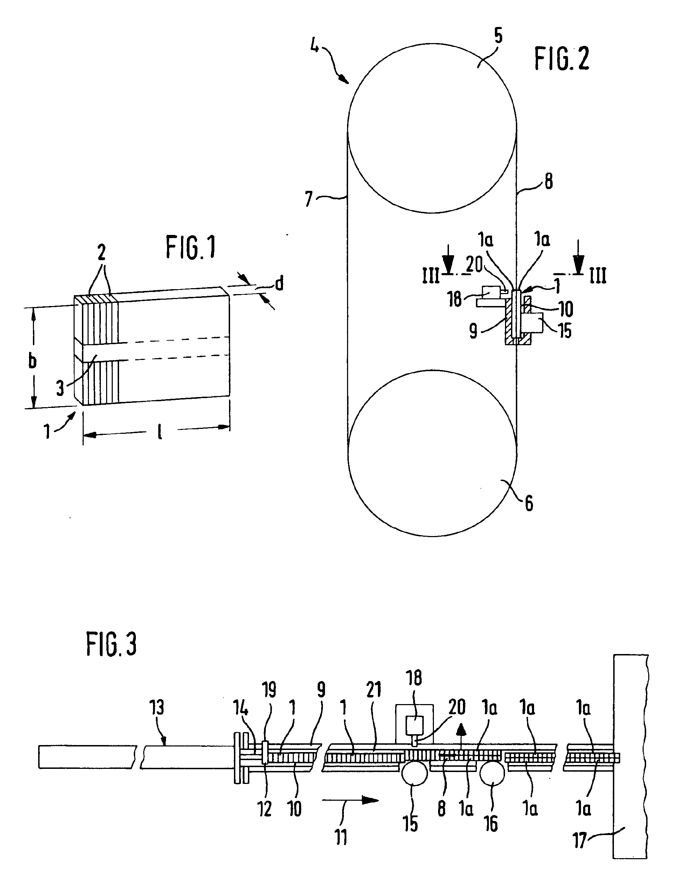

Gemäß Fig. 1 besteht die Parketttafel 1 aus im Querschnitt rechteckigen Holzlamellen 2, die hochkant aneinanderliegend angeordnet sind. Um die Tafel 1 zusammenzuhalten, ist sie in der Mitte mit einem Klebeband 3 umwickelt, das quer zu den Lamellen 2 verläuft. Die Dicke d der Tafel 1 beträgt normalerweise 22 mm, ihre Länge 1 beispielsweise 19 cm bis 23 cm und ihre Breite b 14 cm bis 17 cm.

Um aus den Tafeln 1 halb so dicke Tafeln 1a herzustellen, werden die Tafeln 1 gemäß Fig. 2 mit einer Bandsäge 4 in einer zur Tafelebene parallelen Ebene in der Mitte durchgeschnitten.

Die Bandsäge 4 weist in einem nicht dargestellten Gestell zwei übereinander angeordnete Umlenkrollen 5, 6 auf, von denen eine durch einen nicht dargestellten Motor angetrieben wird. Die Umlenkrollen 5, 6, die waagrechte, zueinander parallele Drehachsen besitzen, werden von einem endlosen, umlaufenden Sägeband 7 umschlungen.

Die Tafeln 1 werden gemäß Fig. 2 und 3 dem senkrechten Schneidtrum 8 der Bandsäge 4 zwischen den beiden Umlenkrollen 5, 6 zugeführt. Dazu ist eine Schiene 9 mit einer Führungsnut 10 vorgesehen, die in der in Fig. 3 mit dem Pfeil 11 gekennzeichneten Bewegungsrichtung der Tafeln 1 vor und nach dem Schneidtrum 8 eine Länge aufweist, die einem Vielfachen der Länge der Tafeln 1 entspricht. Die Tiefe der Nut 10 entspricht mehr als drei viertel der Breite der Tafeln 1.

In dieser Nut 10 sind die Tafeln 1 und nach dem Zerschneiden die dünnen Tafeln 1a hochkant stehend angeordnet, und zwar die dicken Tafeln 1 einzeln hintereinander und die dünnen Tafeln 1a paarweise hintereinander.

Zum Transport der Tafeln 1 zu dem Schneidtrum 8 ist gemäß Fig. 3 ein Schieber 12 vorgesehen, der von einer pneumatischen Kolben/Zylindereinheit 13 betätigt wird, von der in Fig. 3 die Kolbenstange 14 zu sehen ist. Der Schieber 12 schiebt die Tafeln 1 bis zu dem Schneidtrum 8. Vor und nach dem Schneidtrum 8 sind an einer Seite der Führungsnut 10 Rollen 15, 16 vorgesehen, wobei die Rolle 15 den Transport der Tafeln 1 durch das Schneidtrum 8 unterstützt, während die Rolle 16 die durchsägten dünnen Tafeln 1a in der Führungsnut 10 weiter zu einem Ablagetisch 17 transportiert. Zugleich werden die Tafeln 1 durch die Rollen 15, 16 im Bereich des Schneidtrums 8 gegen die gegenüberliegende Nutwand 21 gedrückt, sodass sie beim Schneiden genau positioniert sind. Die Andrückrollen 15, 16 werden durch einen nicht dargestellten Motor angetrieben und sind federnd ausgelegt, beispielsweise mit einem gummielastischen Mantel versehen.

Die Hin- und Herbewegung des Schiebers 12 wird u.a. durch einen pneumatischen Schalter 18 gesteuert. Dazu ist am Schieber 12 ein Finger 19 vorgesehen, der zum Umschalten des Schalters 18 an einem Finger 20 des Schalters 18 angreift.

## Patentansprüche

1. Vorrichtung zur Herstellung von Hochkantlamellenparkett geringer Dicke, **gekennzeichnet durch** eine Säge und eine Führung, mit der mit einem Klebeband (3) umwickelte dicke Hochkantlamellenparkett-Tafeln (1) der Säge so zugeführt werden, dass die Tafeln (1) in einer zur Tafelebene parallelen Ebene durchtrennt werden.

2. Vorrichtung nach Anspruch 1, **dadurch gekennzeichnet, dass** die Säge durch eine Bandsäge (4) gebildet wird.

3. Vorrichtung nach Anspruch 1 oder 2, **dadurch gekennzeichnet, dass** die Führung eine Führungsnut (10) aufweist, in der die Tafeln (1, 1a) hochkant stehend angeordnet sind.

4. Vorrichtung nach einem der vorstehenden Ansprüche, **dadurch gekennzeichnet, dass** die Tafeln (1) beim Durchschneiden mit der Säge (4) mit wenigstens einer Andrückrolle (15, 16) an die gegenüberliegende Nutwand (21) der Führungsnut (10) gedrückt werden.

5. Vorrichtung nach Anspruch 4, **dadurch gekennzeichnet, dass** die wenigstens eine Andrückrolle (15, 16) angetrieben ist.

6. Vorrichtung nach Anspruch 4 oder 5, **dadurch gekennzeichnet, dass** wenigstens eine Andrückrolle (15) vor und wenigstens eine Andrückrolle (16) nach dem Schneidtrum (8) der Bandsäge (6) angeordnet ist.

7. Vorrichtung nach einem der vorstehenden Ansprüche, **dadurch gekennzeichnet, dass** ein Schieber (12) vorgesehen ist, der die Tafeln (1) in der Führungsnut (10) zu dem Schneidtrum (8) der Bandsäge (4) schiebt.

8. Vorrichtung nach Anspruch 7, **dadurch gekennzeichnet, dass** der Schieber (12) durch eine pneumatische Kolben/Zylindereinheit (13) betätigbar ist.

9. Vorrichtung nach einem der vorstehenden Ansprüche, **dadurch gekennzeichnet, dass** die Führungsnut (10) eine Länge aufweist, die einem Vielfachen der Länge (1) der Tafeln (1) entspricht.

10. Vorrichtung nach Anspruch 9, **dadurch gekennzeichnet, dass** die Führungsnut (10) vor und/oder nach dem Schneidtrum (8) der Bandsäge (4) eine Länge aufweist, die einem Vielfachen der Länge (1) der Tafeln (1) entspricht.

11. Vorrichtung nach einem der vorstehenden Ansprüche, **gekennzeichnet durch** eine Einrichtung, die die nach dem Durchtrennen der Tafeln (1) gebildeten dünnen Tafeln (1a) mit einem Klebeband versieht.
